# EUROPÄISCHE PATENTSCHRIFT

(11) **EP 0 902 909 B1**
(45) Veröffentlichungstag und Bekanntmachung des Hinweises auf die Patenterteilung: **02.10.2002**
(21) Anmeldenummer: 97925897.7
(22) Anmeldetag: 30.05.1997
(51) Int. Cl.: G02F 1/21, G02F 1/1333

(54) **INTERFERENZFILTER AUF DER BASIS VON PORÖSEM SILICIUM**
INTERFERENCE FILTER BASED ON POROUS SILICON
FILTRE D'INTERFERENCE A BASE DE SILICIUM POREUX

(30) Priorität: 05.06.1996 DE 19622748
(43) Veröffentlichungstag der Anmeldung: 24.03.1999
(73) Patentinhaber: Forschungszentrum Jülich GmbH, 52425 Jülich (DE)
(72) Erfinder: BERGER, Michael, D-53343 Wachtberg (DE); THÖNISSEN, Markus, D-41334 Nettetal (DE); KRÜGER, Michael, D-52066 Aachen (DE); ARENS-FISCHER, Rüdiger, D-52066 Aachen (DE); LÜTH, Hans, D-52074 Aachen (DE)
(86) Internationale Anmeldenummer: DE9701117
(87) Internationale Veröffentlichungsnummer: WO97046908

(56) Entgegenhaltungen:
- WO-A-91/10926
- DE-A- 4 319 413
- US-A- 4 411 495
- US-A- 4 970 129

## Beschreibung

Die Erfindung betrifft einen Interferenzfilter oder ein Bauelement mit Interferenzfilterfunktion auf der Basis von porösem Material, insbesondere Silicium gemäß dem Oberbegriff des Anspruchs 1.

WO 91/10926 betrifft ein zusammengesetztes Volumen-Phasen-Hologramm und andere optische holographische Elemente, und insbesondere die Bereitstellung von holographischen Elementen mit einer diskontinuierlichen Verteilung einer getrennten Phase, die einen Flüssigkristall enthält. Die zusammengesetzten optischen holographischen Elemente zeigen eine unterschiedliche Brechungswirkung als Funktion externer Anregungen wie einem angelegten elektrischen Feld.

US 4,970,129 betrifft Volumen-Phasen-Hologramme und andere holographischen Elemente, und insbesondere die Herstellung von Volumen-Phasen-Hologrammen und anderen holographischen Elementen, die dadurch gekennzeichnet sind, daß sie mikroskopische Bereiche eines Materials mit einem Brechungsindex besitzen, der sich von dem holographischer Streifen (fringes) unterscheidet. Die holographischen Elemente können eine erhöhte Beugungswirkung und/oder andere wünschenswerte Eigenschaften aufweisen.

Als Stand der Technik ist weiterhin aus M.G. Berger et al., Mat. Res. Soc. Symp. Proc. 358, 327 (1995) oder DE-OS 43 19 413 die Eignung des porösen Siliciums (PS) bekannt, Schichtsysteme mit nahezu beliebigem Aufbau durch einen elektrochemischen Prozeß zur Realisierung von Interferenzfiltern herzustellen. Mit Hilfe derartiger Interferenzfilter lassen sich sowohl Reflexionsals auch Transmissionsfilter für Lichtwellenlängen im gesamten sichtbaren, aber auch infraroten oder ultravioletten Spektralbereich herstellen. Dabei ist es möglich, poröses Silicium nicht nur großflächig, sondern mit Hilfe der aus der Halbleitertechnik bekannten Photolithographie auch auf lateralen Dimensionen von wenigen Mikrometern herzustellen, sodaß auf vergleichweise kleiner Fläche unterschiedliche Interferenzfilter gebildet werden.

Bei geeigneter Wahl der Herstellungsparameter lassen sich Interferenzfilter mit erwünschter Reflexions- oder Transmissionseigenschaft herstellen, wie aus M.G. Berger et al., in Optical Interference Coatings, Florin Abeles ed., Proc. SPIE 2253, 865 (1994) bekannt. Es wurde z. B. ein sogenannter Bragg-Reflektor hergestellt, der einerseits für bestimmte Farben im sichtbaren Spektralbereich ein sehr hohes Reflexionsvermögen aufweist, andererseits andere Farben praktisch nicht reflektiert.

Nachteilig bei den bekannten Bauelementen mit Interferenzfilterfunktion ist die Festlegung dieser Funktion durch die Herstellungsrandbedingungen.

Es ist deshalb Aufgabe der Erfindung ein Bauelement mit Interferenzfilterfunktion bzw. ein Interferenzfilter auf der Basis eines porösen Materials insbesondere Siliciums zu schaffen, deren Reflexions- und/oder Transmissionseigenschaft auch nach Herstellung des Bauelements gezielt einstellbar oder veränderbar ist.

Die Aufgabe wird gelöst durch ein Bauelement mit Interferenzfilterfunktion gemäß der Gesamtheit der Merkmale nach Anspruch 1. Weitere zweckmäßige oder vorteilhafte Ausführungsformen finden sich in den auf diesen Anspruch rückbezogenen Unteransprüchen.

Es wurde erkannt, die Poren des PS mit geeignetem Material aufzufüllen und durch Anlegen einer elektrischen Spannung an dieses Material gezielt die Reflektions und / oder Transmissionseigenschaften einstellbar veränderbar auszubilden.

Im einzelnen erfolgt das Auffüllen der Poren im PS mit einer Substanz, die unter dem Einfluß eines elektrischen Feldes ihren Brechungsindex verändern kann. Hierbei kommen vorzugsweise Flüssigkristalle als geeignetes Material in Betracht, die doppelbrechende Eigenschaften besitzen und deren Brechungsindex durch Umorientierung der Molekülketten in einem elektrischen Feld veränderoder einstellbar ist.

Mit Hilfe des erfindungsgemäßen Bauelements, insbesondere als Interferenzfilter, kann zum Beispiel ein Computerchip gebildet werden, der aus einer insbesondere matrixförmigen Anordnung mehrerer Reflexionsfilter, vorzugsweise für die drei Grundfarben Rot, Grün und Blau, besteht. Dabei können diese jeweils einzeln aktivierbar ausgebildet sein. Mit Hilfe eines solchen Chips kann ein Projektionsdisplay, beispielsweise für bildgebende Geräte, wie z.B. ein Monitor oder TV-Gerät, gebildet werden.

Im einzelnen besteht poröses Silicium aus einem schwammartigen Gerüst von Silicium-Kristalliten, welches von Poren durchzogen ist. Die Größe der Kristallite und der Poren variiert je nach Dotierung des Ausgangssubstrats im Bereich von vorzugsweise 2 Nanometer bis 2 Mikrometer.

Falls die Wellenlänge des Lichtes sehr viel größer als die Strukturen im PS ist, erscheint das PS für das Licht als homogenes Material ("effektives Medium") und seine Eigenschaften werden durch die Angabe eines effektiven Brechungsindexes beschrieben, welcher von den Brechungsindizes der Silicium-Kristallite und dem Volumenanteil der Poren (Porosität) abhängt.

Wird bei dem elektrochemischen Ätzprozeß nicht nur eine Schicht mit einer bestimmten Porosität hergestellt, sondern stattdessen ein Schichtsystem, welches aus einer Abfolge einzelner Schichten mit unterschiedlicher Porosität besteht, so werden durch die unterschiedlichen effektiven Brechungsindizes der Einzelschichten Interferenzeffekte im Schichtsystem hervorgerufen. Auf diese Weise lassen sich z.B. Filter herstellen, die, wenn sie mit einer weißen Lichtquelle beleuchtet werden, nur eine Wellenlänge, d.h. Farbe reflektieren. Nach der Herstellung des Schichsystems ist diese Farbe nicht mehr veränderlich.

Es wurde nun erkannt, die Poren des PS mit einer Substanz aufzufüllen, die ihren Brechungsindex durch das Anlegen einer elektrischen Spannung bzw. unter dem Einfluß eines elektrischen Feldes verändert (z.B. Flüssigkristalle). Die Änderung des Brechungsindexes der Substanz unter dem Einfluß eines elektrischen Feldes kann dabei sowohl kontinuierlich als auch sprungweise erfolgen. Ebenso ist es möglich, daß sich - wie im Falle von Flüssigkristallen - der Brechungsindex durch die Ausrichtung von Molekülketten nur für bestimmte Ausbreitungsrichtungen des Lichtes ändert.

Im übrigen beschränkt sich die Erfindung nicht auf PS als porenbehaftetes Material. Es sind vielmehr auch andere porenbehaftete Materialien vorstellbar, die mit geeignetem Material aufgefüllt werden.

Die Erfindung ist im weiteren an Hand von Figuren und Ausführungsbeispielen näher erläutert. Es zeigen:
- Fig. 1:: erfindungsgemäßes Bauelement mit einer eine Interferenzfilterfunktion aufweisenden Schichtenfolge;
- Fig. 2:: Tiefenabhängigkeit des Brechungsindexes n für eine Schichtenfolge gemäß Figur 1 mit und ohne angelegter Spannung;
- Fig. 3:: Wellenzahlabhängigkeit der Reflektivität der erfindungsgemäßen die Filterstruktur bildende Schichtenfolge;
- Fig. 4:: mehrere erfindungsgemäße Interferenzfilter zur Bildung eines Reflektionsdisplays.

### Ausführungsbeispiele:

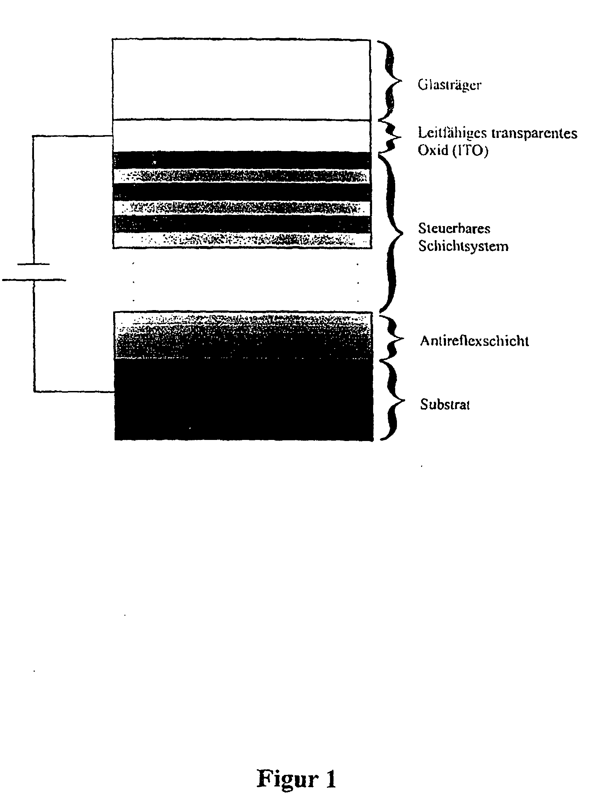

In der Figur 1 ist die erfindungsgemäße Filterstruktur dargestellt.

Im einzelnen ist dazu eine Schichtenfolge mit aufeinanderfolgenden Schichten hergestellt. Auf einem Substrat ist eine Anti-Reflxionsschicht gebildet. Darauf findet sich das mit angelegter elektrischer Spannung steuerbare Schichtensystem aus PS mit unterschiedlicher Porosität in den einzelnen Schichten. Die Zahl der PS-Schichten kann mehr oder weniger groß gewählt werden zum Beispiel 60.

Die elektrisch erzeugte Änderung des Brechungsindexes der Substanz bewirkt je nach deren jeweiligen Volumenanteil (d. h. Porosität) eine mehr oder weniger starke Änderung des effektiven Brechungsindexes der porösen Schicht. Um eine möglichst große Änderung des Reflexions- bzw. Transmissionsvermögens des gesamten Schichtsystems zu erreichen, bietet sich eine spezielle Wahl der Brechungsindizes vom porösen Silicium-Skelett und der in die Poren eingefüllten Substanz an.

Hierzu ist festzuhalten, daß der Brechungsindex n des Silicium-Skeletts z. B. durch eine Oxidation veränderbar ist. Das Endergebnis kann dann ein Schichtsystem aus porösem Glas (SiO₂) sein.

Entspricht der Brechungsindex der eingefüllten Substanz bei wenigstens einer bestimmten Spannung (z. B. bei angelegter Spannung) demjenigen der Silicium- oder SiO₂-Kristallite, so ist der effektive Brechungsindex einer Schicht nicht mehr von dem Volumenanteil der Substanz abhängig. Folglich verliert das Schichtsystem seine filternde Wirkung, da nun jede Einzelschicht denselben Brechungsindex aufweist.

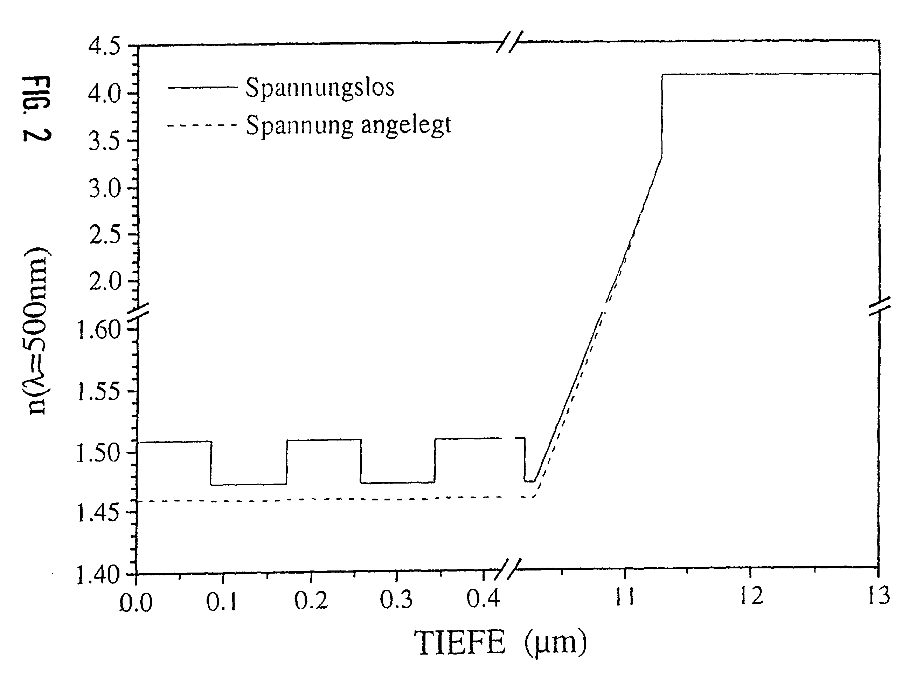

In der Figur 2 ist der Verlauf des Brechungsindexes über die Schichttiefe für einen solchen Fall eingezeichnet. Dabei stelle der gestrichelte Verlauf den Fall angelegter Spannung dar.

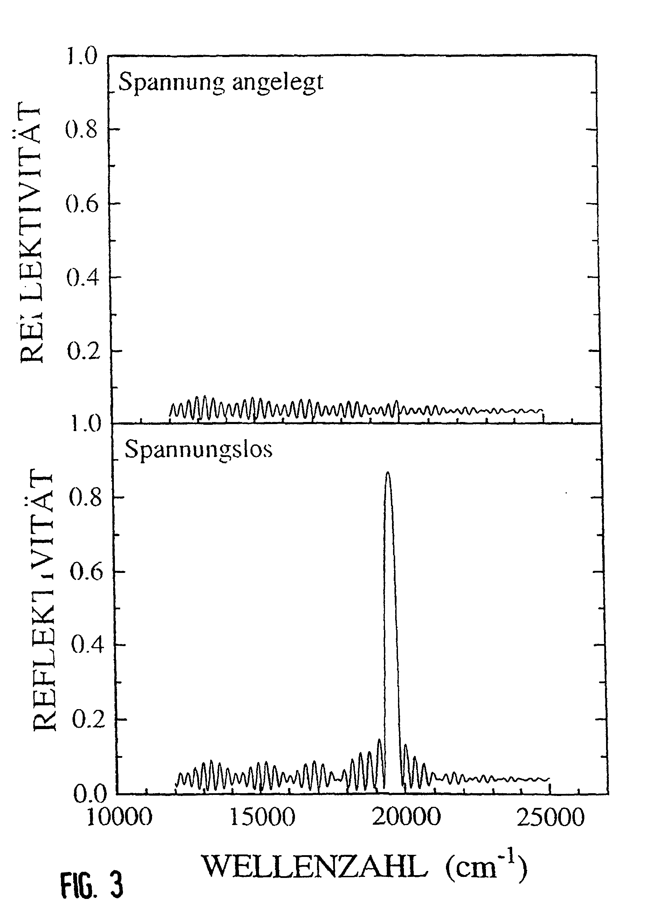

Für die in dem Beispiel von Figur 2 angenommenen Werte ergibt sich dann das oben in Figur 3 dargestellte Reflexionsspektrum. Es weist eine über den gesamten dargestellten Spektralbereich niedrige Reflektivität auf.

Die geringen Oszillationen werden durch Interferenzen über die gesamte Probendicke verursacht.

Im spannungslosen Fall, dargestellt durch die durchgezogene Linie in Figur 2, ändert sich der Brechungsindex der in den Poren befindlichen Substanz zu größen Werten hin und weicht von demjenigen der Silicium- bzw. SiO₂-Kristallite ab. Durch die unterschiedlichen Volumenanteile der Substanz in porösen Schichten mit unterschiedlicher Porosität ergibt sich insgesamt eine stärkere Änderung des Brechungsindexes für diejenigen Schichten mit hoher Porosität. Der sich im spannungslosen Fall ergebende Verlauf des Brechungsindexes über die Schichttiefe führt demzufolge zu dem im unteren Teil von Figur 3 gezeigten weiteren Reflexionsspektrum. Für eine bestimmte Wellenlänge, die zum Beispiel durch die Wahl der Herstellungsparameter des Schichtsystems vorgegeben ist, ergibt sich eine sehr hohe Reflektivität.

In dem hier gezeigten Beispiel zeigt sich daher im spannungslosen Fall ein grüner Farbeindruck des Schichtsystems, während bei angelegter Spannung das Schichtsystem schwarz erscheint. Derart elektrisch veränderliche Interferenzfilter können z.B. in Reflexionsdisplays oder auch für farbselektive Detektoren mit,hoher spektraler Empfindlichkeit zum Einsatz kommen.

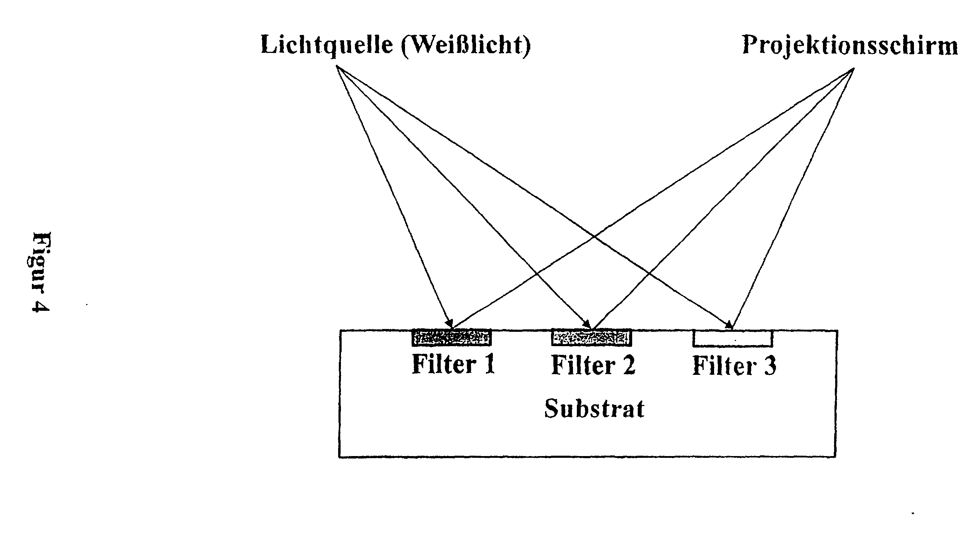

In der Figur 4 ist der Aufbau eines Reflektionsdisplays schematisch dargestellt, welches sich beispielsweise durch Zusammenbau mehrerer Interferenzfilterfunktionen in Matrixform auf einem einzelnen Substrat ergibt:

Weisses Licht wird auf die elektrisch veränderlichen Interferenzfilter gegeben. Wahlweise können die einzelnen erfindungsgemäßen Filter getrennt oder zusammen angesteuert werden, so daß auf dem Projektionsschirm ein aus der Summe der einzelnen Reflexionen gebildeter Lichtpunkt in der gewünschten Farbe dargestellt wird. Eine Matrix von solchen Filterschichten bildet somit ein Reflexionsdisplay, welches farbige Bilder auf dem Projektionsschirm darstellen kann. Durch Ansteuerung der bildgebenden Reflektionspunkte kann auf diese Weise die Farbe verändert oder eingestellt und somit der erwünschte Bildpunkt erhalten werden. Auf diese Weise kann ein aus vielen solchen Bildpunkten zu bildendes Gesamtbild wie zum Beispiel ein Bildschirm in Reflektion erhalten werden.

Außer PS sind zum Beispiel auch poröses SiGe oder GaAs oder andere Materialien zur Ausbildung der Erfindung vorstellbar.

## Patentansprüche

1. Interferenzfilter oder Bauelement mit Interferenzfilterfunktion mit wenigstens einer Schicht aus porösem Material, wobei wenigstens ein Teil der Poren oder alle Poren des porösen Materials mit einer Substanz aufgefüllt sind, deren Brechungsindex durch einen äußeren Einfluß auf einen bestimmten Wert einstellbar ist,
**dadurch gekennzeichnet, daß**
der Brechungsindex der Substanz auf den Wert des Brechungsindex des porösen Materials einstellbar ist und das poröse Material aus porösem Si, SiO₂, SiGe oder GaAs besteht.

2. Interferenzfilter oder Bauelement mit Interferenzfilterfunktion nach Anspruch 1,
**dadurch gekennzeichnet, daß**
der Brechungsindex der Substanz durch eine elektrische Spannung oder einen elektrischen Strom veränderbar oder einstellbar ist.

3. Interferenzfilter oder Bauelement mit Interferenzfilterfunktion nach Anspruch 1,
**dadurch gekennzeichnet, daß**
der Brechungsindex der Substanz durch eine Temperaturänderung veränderbar ist.

4. Matrixanordnung, insbesondere auf einem einzigen Substrat mit einer Mehrzahl von Interferenzfiltern oder Bauelementen mit Interferenzfilterfunktionen nach einem oder mehreren der vorhergehenden Ansprüche zur Bildung eines Reflektionsdisplays.

## Claims

1. An interference filter or a component with an interference filter function, comprising at least one layer of porous material, wherein at least part of the pores or all the pores of the porous material are filled with a substance, the refractive index of which can be set to a defined value by an external effect,
**characterised in that**
the refractive index of the substance can be set to the value of the refractive index of the porous material and the porous material consists of porous Si, SiO₂, SiGe or GaAs.

2. An interference filter or a component with an interference filter function according to claim 1,
**characterised in that**
the refractive index of the substance can be varied or adjusted by an electric voltage or by an electric current.

3. An interference filter or a component with an interference filter function according to claim 1,
**characterised in that**
the refractive index of the substance can be varied or adjusted by a change in temperature.

4. A matrix arrangement, particularly on a single substrate, comprising a multiplicity of interference filters or of components which perform interference filter functions according to one or more of the preceding claims, for forming a reflection display.

## Revendications

1. Filtre d'interférence ou composant avec fonction de filtre d'interférence comprenant au moins une couche à base de matériau poreux, au moins une partie des pores ou tous les pores du matériau poreux étant remplis avec une substance, dont l'indice de réfraction peut être réglé par une influence extérieure sur une certaine valeur,
**caractérisé en ce que** l'indice de réfraction de la substance peut être réglé sur la valeur de l'indice de réfraction du matériau poreux et le matériaux poreux est à base de Si poreux, de SiO₂, de SiGe ou de GaAs.

2. Filtre d'interférence ou élément de construction avec fonction de filtre d'interférence selon la revendication 1, **caractérisé en ce que** l'indice de réfraction de la substance peut être modifié ou réglé par une tension électrique ou un courant électrique.

3. Filtre d'interférence ou élément de construction avec fonction de filtre d'interférence selon la revendication 1, **caractérisé en ce que** l'indice de réfraction de la substance peut être modifié par une variation de température.

4. Dispositif à matrice, en particulier sur un substrat unique avec un grand nombre de filtres d'interférence ou de composants avec des fonctions de filtre d'interférence selon l'une ou plusieurs des revendications précédentes pour former un écran réflecteur.
